# EUROPÄISCHE PATENTSCHRIFT

(11) **EP 3 482 633 B1**
(45) Veröffentlichungstag und Bekanntmachung des Hinweises auf die Patenterteilung: **22.11.2023**
(21) Anmeldenummer: 18401088.2
(22) Anmeldetag: 30.10.2018
(51) Int. Cl.: A01M 7/00, A01M 29/16

(54) **LANDWIRTSCHAFTLICHES ARBEITSGERÄT**
AGRICULTURAL WORKING DEVICE
OUTILLAGE AGRICOLE

(30) Priorität: 09.11.2017 DE 102017126223
(43) Veröffentlichungstag der Anmeldung: 15.05.2019
(73) Patentinhaber: Amazonen-Werke H. Dreyer SE & Co. KG, 49205 Hasbergen (DE)
(72) Erfinder: Rahe, Florian, 49504 Lotte (DE); Klemann, Timo, 49191 Belm (DE)

(56) Entgegenhaltungen:
- WO-A1-96/12401
- WO-A1-2016/025848
- DE-A1- 19 723 770
- DE-C1- 10 002 880
- DE-C2- 4 413 739
- US-B1- 6 199 000

## Beschreibung

Die Erfindung betrifft ein landwirtschaftliches Arbeitsgerät, insbesondere eine Verteilmaschine, nach dem Oberbegriff des Patentanspruchs 1, ein landwirtschaftliches Arbeitssystem nach dem Oberbegriff des Patentanspruchs 15 und ein Verfahren zum Betreiben eines landwirtschaftlichen Arbeitsgeräts nach dem Oberbegriff des Patentanspruchs 17.

Landwirtschaftliche Arbeitsgeräte weisen regelmäßig eine Vielzahl von Sensoreinheiten auf, deren Daten beim Durchführen von landwirtschaftlichen Arbeitsvorgängen berücksichtigt werden, um Arbeitsergebnisse zu verbessern oder die Arbeitsgeschwindigkeit zu erhöhen.

Beispielsweise sind landwirtschaftliche Arbeitsgeräte bekannt, deren Sensoreinheiten innerhalb eines Detektionsbereichs Bewuchsinformationen erfassen. Die Druckschrift DE 10 2014 106 974 A1 beschreibt beispielsweise eine Hyperspektralkamera und schlägt den Einsatz spektraler Bildgebung in der Landwirtschaft vor.

Aus DE 44 13 739 C2 ist beispielsweise ein System bekannt, welches mit einer optischen Erfassungseinrichtung ausgestattet ist, um einen Pflanzenbestand zu erfassen und Unterschiede zwischen Kultur- und Wildpflanzen festzustellen.

Ferner schlägt die Druckschrift DE 10 2015 119 026 A1 eine hochauflösende Erfassung eines Pflanzenbestands mithilfe von optischen Sensoren vor, um Kulturpflanzen erkennen zu können. Auf Grundlage der Daten der optischen Sensoren soll dann Flüssigkeit punktgenau ausgebracht werden.

Eine weitere Schadpflanzenerkennung ist in der US 61 99 000 B1 offenbart.

Hochauflösende Sensoren, welche die Erfassung von Bewuchsinformationen erlauben, weisen regelmäßig einen äußerst beschränkten Detektionsbereich auf, sodass zur Erfassung von Bewuchsinformationen über die gesamte Maschinenbreite eine Vielzahl von entsprechenden Sensoren notwendig ist. Die notwendige Anzahl von entsprechenden hochauflösenden Sensoren bedingt jedoch erhebliche Kosten, sodass sich entsprechende Systeme, welche Bewuchsinformationen über die gesamte Arbeitsbreite eines landwirtschaftlichen Arbeitsgeräts erfassen, bisher nicht durchgesetzt haben.

Aufgabe der vorliegenden Erfindung ist es somit, die Erfassung von Informationen, insbesondere die Erfassung von Bewuchsinformationen, über die gesamte Arbeitsbreite eines landwirtschaftlichen Arbeitsgeräts zu ermöglichen, ohne dass dies zu unverhältnismäßig hohen Kosten bei der Umsetzung eines entsprechenden Systems führt.

Die Aufgabe wird gelöst durch ein landwirtschaftliches Arbeitsgerät der eingangs genannten Art, wobei die Sensoreinheiten zumindest eine Übersichtssensoreinheit und zumindest eine Präzisionssensoreinheit umfassen, wobei der Detektionsbereich der zumindest einen Übersichtssensoreinheit größer ist als der Detektionsbereich der zumindest einen Präzisionssensoreinheit.

Die Erfindung macht sich die Erkenntnis zunutze, dass vergleichsweise kostenintensive Präzisionssensoreinheiten mit vergleichsweise kostengünstigen Übersichtssensoreinheiten kombiniert werden können, um Informationen, insbesondere Bewuchsinformationen, zu erfassen, ohne dass hierbei wesentliche Informationen, insbesondere Bewuchsinformationen, verloren gehen. Vielmehr kann die Qualität der erfassten Informationen auch aufrechterhalten werden, wenn nicht ausschließlich hochauflösende Präzisionssensoreinheiten eingesetzt werden. Somit kann die notwendige Gesamtmenge an Sensoreinheiten und insbesondere die notwendige Gesamtmenge an Präzisionssensoreinheiten erheblich verringert werden, sodass die Erfassung von Informationen über die gesamte Maschinenbreite des landwirtschaftlichen Arbeitsgeräts nicht länger unverhältnismäßig hohe Kosten zur Umsetzung des Erfassungssystems bedingt.

Die zumindest eine Übersichtssensoreinheit und die zumindest eine Präzisionssensoreinheit weisen beispielsweise unterschiedliche Sensortypen, unterschiedliche Sensorgrößen, unterschiedliche erzielbare Bildauflösungen und/oder unterschiedliche optische Systeme auf. Die zumindest eine Übersichtssensoreinheit erlaubt dabei beispielsweise die Erkennung von Bewuchsdichte und/oder Pflanzenmenge. Die zumindest eine Präzisionssensoreinheit erlaubt beispielsweise die Erkennung und/oder Identifizierung einzelner Schadpflanzen. Die Kombination von zumindest einer Übersichtssensoreinheit und zumindest einer Präzisionssensoreinheit erlaubt eine zuverlässige Erkennung von Schadpflanzen, insbesondere entlang der gesamten Maschinenbreite, bedingt jedoch einen erheblich geringeren Kostenaufwand als bei einem ausschließlichen Einsatz von Präzisionssensoreinheiten. Die Sensoreinheiten können beispielsweise über eine Chlorophyllerkennung verfügen, sodass Grünpflanzen von unbewachsenem Boden oder von anderen Kulturpflanzen unterschieden werden können.

Letztendlich können die Unterschiede zwischen der zumindest einen Übersichtssensoreinheit und der zumindest einen Präzisionssensoreinheit zu erblichen Stückkostenunterschieden führen, wobei die Stückkosten der zumindest einen Übersichtssensoreinheit dabei wesentlich geringer sein können als die Stückkosten der zumindest einen Präzisionssensoreinheit. Alternativ oder zusätzlich kann der Abstand der zumindest einen Übersichtssensoreinheit zum Boden größer sein als der Abstand der zumindest einen Präzisionssensoreinheit zum Boden, wodurch die alleinigen Sensordaten der zumindest einen Übersichtssensoreinheit jedoch ggf. keine Präzisionsauswertung, beispielsweise zum Identifizieren von Schadpflanzen, mehr erlauben. Beispielsweise misst der Detektionsbereich einer Präzisionssensoreinheit 50 × 50 cm. Beispielsweise misst der Detektionsbereich einer Übersichtssensoreinheit 250 × 250 cm.

In einer bevorzugten Ausführungsform des erfindungsgemäßen landwirtschaftlichen Arbeitsgeräts sind die mehreren Sensoreinheiten dazu eingerichtet, elektromagnetische Strahlung zu detektieren, wobei die mehreren Sensoreinheiten vorzugsweise als lichtsensitive Sensoreinheiten ausgebildet sind. Die zumindest eine Übersichtssensoreinheit und die zumindest eine Präzisionssensoreinheit können unterschiedliche Linsen aufweisen, sodass der Detektionsbereich der zumindest einen Übersichtssensoreinheit gegenüber dem Detektionsbereich der zumindest einen Präzisionseinheit vergrößert ist. Die mehreren Sensoreinheiten können beispielsweise dazu eingerichtet sein, elektromagnetische Strahlung im Ultraviolettbereich, im Infrarotbereich und/oder in dem für Menschen sichtbaren Bereich zu erfassen. Vorzugsweise sind die mehreren Sensoreinheiten jeweils dazu eingerichtet, innerhalb ihres Detektionsbereichs Farben und/oder Strukturen zu erfassen. Dadurch, dass die mehreren Sensoreinheiten eine Farberfassung erlauben, können Pflanzentypen, Pflanzensorten oder Pflanzengattungen zuverlässig erfasst werden, sodass die erfassten Pflanzen einem Nutzbewuchs oder einem Schadbewuchs zugeordnet werden können. Dadurch, dass die mehreren Sensoreinheiten eine Strukturerfassung erlauben, können Saatreihen oder Pflanzenreihen erfasst werden. Ferner können die mehreren Sensoreinheiten auch als Radarsensoren ausgebildet sein und/oder die Erfassung von Reflexionseigenschaften erlauben. Vorzugsweise erlauben die mehreren Sensoreinheiten die Erstellung von Strahlungssignaturen, beispielsweise die Erstellung von Infrarotsignaturen.

Außerdem ist ein erfindungsgemäßes landwirtschaftliches Arbeitsgerät bevorzugt, bei welchem sich die Detektionsbereiche von einzelnen oder sämtlichen nebeneinander angeordneten Sensoreinheiten jeweils in einem Überdeckungsbereich zumindest abschnittsweise überdecken. Dadurch, dass sich die Detektionsbereiche von einzelnen oder sämtlichen nebeneinander angeordneten Sensoreinheiten jeweils in einem Überdeckungsbereich zumindest abschnittsweise überdecken, kann ein Vergleich der dem Überdeckungsbereich zugeordneten Sensordaten erfolgen. Durch den Vergleich können Informationsmuster, welche durch die zumindest eine Übersichtssensoreinheit erfasst wurden, auf Basis von Informationen der zumindest einen Präzisionssensoreinheit bewertet werden. Aus entsprechenden Bewertungen können den Informationsmustern beispielsweise Bewuchsinformationen zugeordnet werden, welche aus den alleinigen Daten der zumindest einen Übersichtssensoreinheit nicht ableitbar gewesen wären und welche bei alleiniger Nutzung der Präzisionssensoren nicht für die gesamte Maschinenbreite verfügbar wären.

Außerdem ist ein erfindungsgemäßes landwirtschaftliches Arbeitsgerät vorteilhaft, bei welchem die Sensoreinheiten mehrere Übersichtssensoreinheiten und/oder mehrere Präzisionssensoreinheiten umfassen. Vorzugsweise sind entlang der Maschinenbreite des landwirtschaftlichen Arbeitsgeräts abwechselnd Übersichtssensoreinheiten und Präzisionssensoreinheiten angeordnet.

Vorzugsweise decken die Detektionsbereiche der mehreren Sensoreinheiten die gesamte Maschinenbreite des landwirtschaftlichen Arbeitsgeräts ab.

In einer anderen bevorzugten Ausführungsform des erfindungsgemäßen landwirtschaftlichen Arbeitsgeräts überdecken sich die Detektionsbereiche der Übersichtssensoreinheiten und der Präzisionssensoreinheiten in mehreren Überdeckungsbereichen zumindest abschnittsweise. Durch die Auswertung von mehreren Überdeckungsbereichen können den von den Übersichtssensoreinheiten erfassten Informationsmustern beispielsweise weitere Bewuchsinformationen zugeordnet werden, sodass die Qualität der erfassten Informationen weiter gesteigert wird.

In einer weiteren Ausführungsform des erfindungsgemäßen landwirtschaftlichen Arbeitsgeräts sind zwischen einzelnen oder sämtlichen benachbarten Präzisionssensoreinheiten jeweils eine oder mehrere Übersichtssensoreinheiten angeordnet. Insbesondere sind die Präzisionssensoreinheiten und die Übersichtssensoreinheiten abwechselnd über die Maschinenbreite des landwirtschaftlichen Arbeitsgeräts angeordnet. Vorzugsweise ist der Abstand zwischen benachbarten Sensoreinheiten geringer als die Summe deren halber Detektionsbreite, sodass sich ein Überdeckungsbereich der Detektionsbereiche benachbarter Sensoreinheiten ergibt.

Außerdem ist ein erfindungsgemäßes landwirtschaftliches Arbeitsgerät bevorzugt, welches eine Auswerteeinrichtung aufweist, welche signalleitend mit der zumindest einen Übersichtssensoreinheit und der zumindest einen Präzisionssensoreinheit verbunden und dazu eingerichtet ist, auf Grundlage der Sensordaten der zumindest einen Übersichtssensoreinheit und der zumindest einen Präzisionssensoreinheit Schadbewuchs zu identifizieren. Schadbewuchs kann beispielsweise Grünpflanzen auf einem Acker und/oder Wildpflanzen innerhalb eines Kulturpflanzenbewuchses umfassen. Darüber hinaus können auch ungewünschte Eigenschaften eines Kulturpflanzenbewuchses durch die Auswerteeinrichtung erfasst werden. Eigenschaften eines Kulturpflanzenbewuchses sind beispielsweise die Einzelpflanzengröße, der Abstand einzelner Kulturpflanzen zueinander, der Abstand einzelner Kulturpflanzenreihen zueinander, die Färbung der Kulturpflanzen und/oder die Wuchsrichtung oder Ausrichtung der Kulturpflanzen.

In dem erfindungsgemäßen landwirtschaftlichen Arbeitsgerät ist die Auswerteeinrichtung dazu eingerichtet, die Sensordaten der zumindest einen Übersichtssensoreinheit und der zumindest einen Präzisionssensoreinheit zu einem Überdeckungsbereich zu vergleichen und auf Grundlage des Vergleichsergebnisses den Detektionsbereich der zumindest einen Übersichtssensoreinheit auf Schadpflanzen zu untersuchen. Durch den Vergleich der Sensordaten der zumindest einen Übersichtssensoreinheit und der zumindest einen Präzisionssensoreinheit zu einem Überdeckungsbereich können Informationsmustern, welche durch die zumindest eine Übersichtssensoreinheit erfasst wurden, weitere Bewuchsinformationen zugeordnet werden, welche letztendlich von der Präzisionssensoreinheit erfasst wurden. Insbesondere kann ein oder können mehrere Informationsmuster als Schadbewuchs bewertet werden, sodass eine Schadbewuchserkennung im gesamten Detektionsbereich der zumindest einen Übersichtssensoreinheit durch Auffinden identischer oder ähnlicher Informationsmuster erfolgen kann.

Außerdem ist ein erfindungsgemäßes landwirtschaftliches Arbeitsgerät vorteilhaft, bei welchem die Auswerteeinrichtung dazu eingerichtet ist, die Sensordaten der zumindest einen Präzisionssensoreinheit auf Grundlage der Sensordaten der zumindest einen Übersichtssensoreinheit zu extrapolieren. Durch die Extrapolation der Sensordaten der zumindest einen Präzisionssensoreinheit auf Grundlage der Sensordaten der zumindest einen Übersichtssensoreinheit kann somit innerhalb des Detektionsbereichs der zumindest einen Übersichtssensoreinheit eine verlässliche Schadpflanzenidentifizierung bzw. -erkennung erfolgen.

In einer Weiterbildung des erfindungsgemäßen landwirtschaftlichen Arbeitsgeräts ist die Auswerteeinrichtung dazu eingerichtet, auf Grundlage der Sensordaten der zumindest einen Übersichtssensoreinheit eine Bewuchsstruktur zu ermitteln. Aus der ermittelten Bewuchsstruktur können Nutzpflanzenbereiche abgeleitet werden, in welchen kein Schadbewuchs zu erwarten ist. Beispielsweise können aus der ermittelten Bewuchsstruktur Pflanzenreiheninformationen abgeleitet werden, sodass die Fläche zwischen den Pflanzenreihen als potentielle Schadbewuchsfläche bewertet werden kann. Innerhalb der Schadbewuchsfläche erfasster Bewuchs kann somit als Schadbewuchs bewertet werden. In diesem Fall dient die zumindest eine Übersichtssensoreinheit dazu, Nutzpflanzenreihen zu erkennen.

In einer anderen Ausführungsform des erfindungsgemäßen landwirtschaftlichen Arbeitsgeräts ist das landwirtschaftliche Arbeitsgerät als landwirtschaftliches Spritzgerät ausgebildet, insbesondere als Feldspritze, wobei das landwirtschaftliche Arbeitsgerät vorzugsweise ein Verteilergestänge umfasst, an welchem mehrere Ausbringelemente zum Ausbringen einer Spritzflüssigkeit angeordnet sind. Die Ausbringelemente sind vorzugsweise als Spritzdüsen ausgebildet. Wenn das landwirtschaftliche Arbeitsgerät als landwirtschaftliches Spritzgerät ausgebildet ist, können die durch die mehreren Sensoreinheiten erfassten Bewuchsinformationen genutzt werden, um Spritzflüssigkeit lokal auf einen identifizierten Schadbewuchs auszubringen. Vorzugsweise umfasst die Spritzflüssigkeit zumindest einen Wirkstoff, wobei die Wirkstoffmenge oder die Wirkstoffkonzentration in Abhängigkeit der erfassten Bewuchsinformationen angepasst werden kann. Insbesondere kann die Ausbringmenge an Spritzflüssigkeit und/oder Wirkstoffkonzentration in Abhängigkeit der erfassten Bewuchsinformationen lokal angepasst werden. Insbesondere können einzelne Ausbringelemente in Abhängigkeit der erfassten Bewuchsinformationen aktiviert oder deaktiviert werden.

Außerdem ist ein erfindungsgemäßes landwirtschaftliches Arbeitsgerät bevorzugt, bei welchem die mehreren Sensoreinheiten an dem Verteilergestänge angeordnet sind. Vorzugsweise sind die mehreren Sensoreinheiten an dem Verteilergestänge befestigt. Das Verteilergestänge eines landwirtschaftlichen Spritzgerätes erstreckt sich üblicherweise über die gesamte Maschinenbreite, sodass durch die Anordnung der mehreren Sensoreinheiten an dem Verteilergestänge Bewuchsinformationen über die gesamte Maschinenbreite erfassbar sind. Die mehreren Sensoreinheiten können beispielsweise jeweils unmittelbar im Bereich eines Ausbringelements oder zwischen den Ausbringelementen angeordnet sein.

Vorzugsweise kann ein oder können mehrere Ausbringelemente einer Sensoreinheit oder mehreren Sensoreinheiten zugeordnet sein.

In einer anderen Ausführungsform des erfindungsgemäßen landwirtschaftlichen Arbeitsgeräts weist dieses eine Steuerungseinrichtung auf, welche dazu eingerichtet ist, eine lokale Ausbringung der Spritzflüssigkeit in dem Bereich eines identifizierten Schadbewuchses zu initiieren. Auf diese Weise kann eine selbsttätige lokale Spritzflüssigkeitsapplikation in den Schadbewuchsbereichen umgesetzt werden. Dies führt letztendlich zu einem geringeren Schadbewuchsanteil und somit zu einer Ertragssteigerung.

Das landwirtschaftliche Arbeitsgerät kann ferner ein Düngerstreuer, eine Sämaschine oder ein Gerät zur Ausbringung von Gülle bzw. Jauche sein.

In einer Weiterbildung des erfindungsgemäßen landwirtschaftlichen Arbeitsgeräts ist eine Übersichtssensoreinheit oder sind mehrere oder sämtliche Übersichtssensoreinheiten an einem Frontanbau, auf dem Dach oder an anderer Stelle des landwirtschaftlichen Arbeitsgeräts und/oder eines das landwirtschaftliche Arbeitsgerät ziehenden oder tragenden Fahrzeugs angeordnet. Vorzugsweise umfasst der Frontanbau ein Frontgestänge und/oder ist lösbar an einer Kuppeleinrichtung des landwirtschaftlichen Arbeitsgeräts befestigt. Dadurch, dass eine Übersichtssensoreinheit, mehrere oder sämtliche Übersichtssensoreinheiten an einem lösbar befestigten Frontanbau angeordnet sind, wird die Sensor-Nachrüstung vereinfacht. Insbesondere ist der Frontanbau ein Zubehörteil für das landwirtschaftliche Arbeitsgerät. Wenn das landwirtschaftliche Arbeitsgerät bereits über eine oder mehrere Präzisionssensoreinheiten verfügt, kann durch eine Nachrüstung eines entsprechenden Frontanbaus ein erfindungsgemäßes landwirtschaftliches Arbeitsgerät geschaffen werden, welches auch über eine oder mehrere Übersichtssensoreinheiten verfügt.

Die der Erfindung zugrunde liegende Aufgabe wird ferner durch ein landwirtschaftliches Arbeitssystem der eingangs genannten Art gelöst, wobei die Sensoreinheiten des landwirtschaftlichen Arbeitsgeräts und der zumindest einen Drohne des erfindungsgemäßen landwirtschaftlichen Arbeitssystems gemeinsam zumindest eine Übersichtssensoreinheit und zumindest eine Präzisionssensoreinheit umfassen, wobei der Detektionsbereich der zumindest einen Übersichtssensoreinheit größer ist als der Detektionsbereich der zumindest einen Präzisionssensoreinheit. Hinsichtlich der Vorteile und Modifikationen des erfindungsgemäßen landwirtschaftlichen Arbeitssystems wird zunächst auf die Vorteile und Modifikationen des erfindungsgemäßen landwirtschaftlichen Arbeitsgeräts verwiesen.

Die zumindest eine Drohne ist vorzugsweise dazu eingerichtet, autonom, teilautonom und/oder ferngesteuert zu fliegen. Durch die Drohne können die Sensoreinheiten zwischen dem landwirtschaftlichen Arbeitsgerät und der Drohne aufgeteilt werden. Dabei kann die Drohne beispielsweise eine oder mehrere Sensoreinheitentypen umfassen, welche das landwirtschaftliche Arbeitsgerät nicht aufweist. Im Übrigen können die zumindest eine Präzisionssensoreinheit und die zumindest eine Übersichtssensoreinheit entsprechend der vorstehend beschriebenen Möglichkeiten zusammenarbeiten. Die Sensoreinheiten des landwirtschaftlichen Arbeitsgeräts müssen dabei nicht zwangsläufig entlang der Maschinenbreite des landwirtschaftlichen Arbeitsgeräts angeordnet sein.

In einer besonders bevorzugten Ausführungsform des erfindungsgemäßen landwirtschaftlichen Arbeitssystems umfasst die zumindest eine Drohne zumindest eine Übersichtssensoreinheit. In diesem Fall kann ein landwirtschaftliches Arbeitsgerät, welches lediglich eine oder mehrere Präzisionssensoreinheiten aufweist, durch die zumindest eine Drohne ergänzt werden, sodass die Sensordaten der einen oder der mehreren Sensoreinheiten des landwirtschaftlichen Arbeitsgeräts und die Sensordaten der einen oder der mehreren Sensoreinheiten der zumindest einen Drohne, wie vorstehend und nachfolgend beschrieben, gemeinsam ausgewertet werden können.

Die der Erfindung zugrunde liegende Aufgabe wird ferner durch ein Verfahren der eingangs genannten Art gelöst, wobei die Sensoreinheiten zumindest eine Übersichtssensoreinheit und zumindest eine Präzisionssensoreinheit umfassen und der Detektionsbereich der zumindest einen Übersichtssensoreinheit größer ist als der Detektionsbereich der zumindest einen Präzisionssensoreinheit. Insbesondere wird mit dem Verfahren ein landwirtschaftliches Arbeitsgerät nach einer der vorstehend beschriebenen Ausführungsformen betrieben. Hinsichtlich der Vorteile und Modifikationen des erfindungsgemäßen Verfahrens wird zunächst auf die Vorteile und Modifikationen des erfindungsgemäßen landwirtschaftlichen Arbeitsgeräts verwiesen.

In einer bevorzugten Ausführungsform des erfindungsgemäßen Verfahrens umfasst das Identifizieren von Schadbewuchs auf Grundlage der Sensordaten der Sensoreinheiten das Auswerten von Sensordaten der zumindest einen Übersichtssensoreinheit und der zumindest einen Präzisionssensoreinheit zu einem oder mehreren Überdeckungsbereichen, wobei sich der Detektionsbereich von einzelnen oder sämtlichen nebeneinander angeordneten Sensoreinheiten jeweils in einem Überdeckungsbereich zumindest abschnittsweise überdeckt. Das Auswerten von Sensordaten der zumindest einen Übersichtssensoreinheit und der zumindest einen Präzisionssensoreinheit zu einem oder mehreren Überdeckungsbereichen kann das Erfassen von Informationsmustern innerhalb eines Überdeckungsbereichs, das Bewerten eines Informationsmusters als Schadbewuchs, insbesondere auf Grundlage der Sensordaten der zumindest einen Präzisionssensoreinheit, und/oder das Erfassen des Informationsmusters innerhalb der Sensordaten der zumindest einen Übersichtssensoreinheit umfassen.

Das erfindungsgemäße Verfahren sieht ferner vor, dass das Identifizieren von Schadbewuchs auf Grundlage der Sensordaten der Sensoreinheiten das Vergleichen der Sensordaten der zumindest einen Übersichtssensoreinheit und der zumindest einen Präzisionssensoreinheit zu einem Überdeckungsbereich und das Untersuchen des Detektionsbereichs der zumindest einen Übersichtssensoreinheit auf Schadpflanzen auf Grundlage des Vergleichsergebnisses umfasst. Zusätzlich umfasst das Identifizieren von Schadbewuchs auf Grundlage der Sensordaten der Sensoreinheiten das Extrapolieren der Sensordaten der zumindest einen Präzisionssensoreinheit auf Grundlage der Sensordaten der zumindest einen Übersichtssensoreinheit. Durch die Extrapolation der Sensordaten der zumindest einen Präzisionssensoreinheit auf Grundlage der Sensordaten der zumindest einen Übersichtssensoreinheit kann somit innerhalb des Detektionsbereichs der zumindest einen Übersichtssensoreinheit eine verlässliche Schadpflanzenidentifizierung bzw. -erkennung erfolgen.

In einer weiteren Ausführungsform ist das erfindungsgemäße Verfahren ein Verfahren zum Ausbringen einer Spritzflüssigkeit mit einem landwirtschaftlichen Spritzgerät. Vorzugsweise umfasst das Verfahren das lokale Ausbringen der Spritzflüssigkeit in dem Bereich eines identifizierten Schadbewuchses.

Alternativ ist das erfindungsgemäße Verfahren ein Verfahren zum Ausbringen von Streugut, insbesondere Dünger, ein Verfahren zu Ausbringen von Saatgut oder ein Verfahren zum Ausbringen von Gülle bzw. Jauche.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Arbeitsgeräts in einer Rückansicht; und
- Fig. 2: das in der Fig. 1 dargestellte landwirtschaftliche Arbeitsgerät in der Draufsicht.

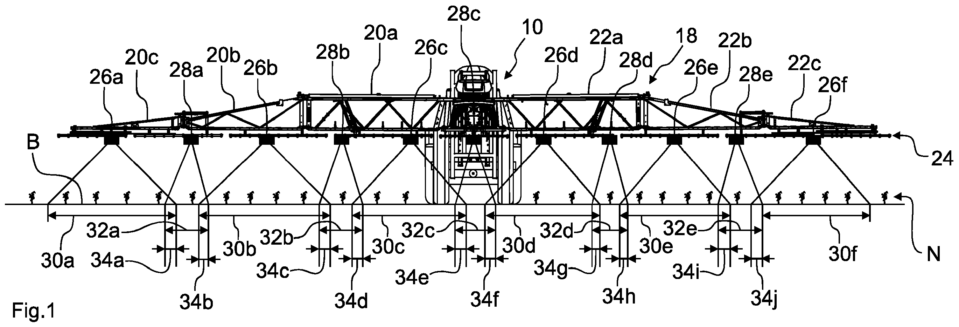

Die Fig. 1 zeigt ein als Feldspritze ausgebildetes landwirtschaftliches Arbeitsgerät 10. Das landwirtschaftliche Arbeitsgerät 10 weist ein Verteilergestänge 18 auf, welches mehrere Gestängesegmente 20a-20c, 22a-22c umfasst. Die Gestängesegmente 20a-20c, 22a-22c befinden sich in einem ausgeklappten Zustand, wobei die Gestängesegmente 20a-20c, 22a-22c zur Einhaltung einer zulässigen Straßentransportbreite einklappbar sind.

An dem Verteilergestänge 18 sind mehrere als Spritzdüsen ausgebildete Ausbringelemente 24 zum Ausbringen einer Spritzflüssigkeit angeordnet. Die Ausbringelemente 24 sind einzeln oder gruppenweise ansteuerbar, sodass eine lokale Ausbringung der Spritzflüssigkeit realisierbar ist.

An dem Verteilergestänge 18 sind mehrere Sensoreinheiten 26a-26f, 28a-28e angeordnet. Die Sensoreinheiten 26a-26f, 28a-28e sind entlang der Maschinenbreite des landwirtschaftlichen Arbeitsgeräts 10 angeordnet und jeweils dazu eingerichtet, innerhalb eines Detektionsbereichs 30a-30f, 32a-32e Bewuchsinformationen zu erfassen.

Die Sensoreinheiten 26a-26f, 28a-28e umfassen mehrere Übersichtssensoreinheiten 26a-26f und mehrere Präzisionssensoreinheiten 28a-28e. Sowohl die Übersichtssensoreinheiten 26a-26f als auch die Präzisionssensoreinheiten 28a-28e sind als lichtsensitive Sensoreinheiten ausgebildet und erlauben somit die Erfassung elektromagnetischer Strahlung.

Die Detektionsbereiche 30a-30f der Übersichtssensoreinheiten 26a-26f sind dabei größer als die Detektionsbereiche 32a-32e der Präzisionssensoreinheiten 28a-28e. Die Präzisionssensoreinheiten 28a-28e umfassen hochauflösende optische Sensoren, welche die Erkennung und Identifizierung einzelner Schadpflanzen erlauben. Die Übersichtssensoreinheiten 26a-26f umfassen weniger hochauflösende optische Sensoren, welche lediglich die Erkennung der Bewuchsdichte und Pflanzenmenge erlauben.

Zwischen zwei benachbarten Übersichtssensoreinheiten 26a-26f ist jeweils eine Präzisionssensoreinheit 28a-28e angeordnet. Die Detektionsbereiche 30a-30f, 32a-32e der Übersichtssensoreinheiten 26a-26f und der Präzisionssensoreinheiten 28a-28e überdecken sich in mehreren Überdeckungsbereichen 34a-34j.

Das dargestellte landwirtschaftliche Arbeitsgerät 10 führt ein Verfahren zum Ausbringen einer Spritzflüssigkeit aus, bei welchem mittels der Sensoreinheiten 26a-26f, 28a-28e Bewuchsinformationen zu dem auf dem Boden B wachsenden Nutzpflanzenbestand N erfasst werden. Auf Grundlage der Sensoreinheiten 26a-26f, 28a-28e wird Schadbewuchs identifiziert, damit mittels der Ausbringelemente 24 Spritzflüssigkeit in dem Bereich eines identifizierten Schadbewuchses lokal ausgebracht werden kann.

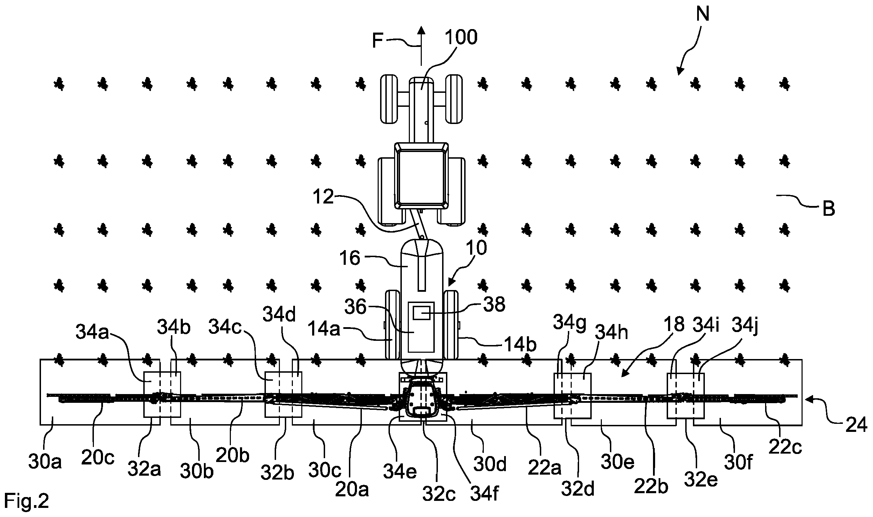

Die Fig. 2 zeigt, dass das landwirtschaftliche Arbeitsgerät 10 eine Steuerungseinrichtung 36 umfasst, über welche die lokale Ausbringung der Spritzflüssigkeit in dem Bereich eines identifizierten Schadbewuchses initiiert werden kann.

Die Steuerungseinrichtung 36 umfasst eine Auswerteeinrichtung 38, welche signalleitend mit den Übersichtssensoreinheiten 26a-26f und den Präzisionssensoreinheiten 28a-28e verbunden ist. Die Auswerteeinrichtung 38 wertet die Sensordaten der Übersichtssensoreinheiten 26a-26f und der Präzisionssensoreinheiten 28a-28e aus, um Schadbewuchs innerhalb des Nutzpflanzenbestandes N zu identifizieren. Als Schadbewuchs kommen beispielsweise Wildpflanzen in Betracht.

Zur Identifikation von Schadbewuchs wertet die Auswerteeinrichtung 38 zunächst die Sensordaten der Übersichtssensoreinheiten 26a-26f und der Präzisionssensoreinheiten 28a-28e zu den Überdeckungsbereichen 34a-34j aus. Hierzu werden die Sensordaten der Übersichtssensoreinheiten 26a-26f und der Präzisionssensoreinheiten 28a-28e zu einzelnen Überdeckungsbereichen 34a-34j miteinander verglichen, sodass auf Grundlage der Vergleichsergebnisse die gesamten Detektionsbereiche 30a-30f der Übersichtssensoreinheiten 26a-26f auf Schadpflanzen untersucht werden können. Hierbei werden die Sensordaten der Präzisionssensoreinheiten 28a-28e auf Grundlage der Sensordaten der Übersichtssensoreinheiten 26a-26f extrapoliert.

Die Auswerteeinrichtung 38 des landwirtschaftlichen Arbeitsgeräts 10 kann die Sensordaten der Übersichtssensoreinheiten 26a-26f auch auswerten, um eine Bewuchsstruktur zu ermitteln. Die ermittelte Bewuchsstruktur kann beispielsweise die Anordnung oder den Verlauf von Pflanzenreihen betreffen. Auf Grundlage der ermittelten Bewuchsstruktur können dann Nutzpflanzenbereiche und Schadpflanzenbereiche ermittelt werden, sodass auf einen Bewuchs innerhalb eines Schadpflanzenbereichs gezielt lokal Spritzflüssigkeit abgegeben werden kann.

Ferner ist ersichtlich, dass die Detektionsbereiche 30a-30f der Übersichtssensoreinheiten 26a-26f und die Detektionsbereiche 32a-32e der Präzisionssensoreinheiten 28a-28e jeweils im Wesentlichen rechteckig sind. Die Fläche der Detektionsbereiche 30a-30f der Übersichtssensoreinheiten 26a-26f ist größer als die Fläche der Detektionsbereiche 32a-32e der Präzisionssensoreinheiten 28a-28e. Ferner ist die Breite der Detektionsbereiche 30a-30f der Übersichtssensoreinheiten 26a-26f größer als die Breite der Detektionsbereiche 32a-32e der Präzisionssensoreinheiten 28a-28e.

Die Fig. 2 zeigt außerdem, dass das als Feldspritze ausgebildete landwirtschaftliche Arbeitsgerät 10 einen auf einem Rahmen angeordneten Vorratstank 16 für die auszubringende Spritzflüssigkeit oder eine Trägerflüssigkeit, auf deren Grundlage die auszubringende Spritzflüssigkeit erzeugt wird, umfasst. Der Rahmen des landwirtschaftlichen Spritzgeräts wird über die Räder 14a, 14b gegenüber dem Boden B abgestützt.

Das landwirtschaftliche Arbeitsgerät 10 ist über eine Kuppeleinrichtung 12 mit einem als Traktor ausgebildeten Fahrzeug 100 verbunden, welches das landwirtschaftliche Arbeitsgerät 10 zieht, sodass sich die Ausbringkombination aus dem Fahrzeug 100 und dem landwirtschaftlichen Arbeitsgerät 10 in Fahrtrichtung FR bewegen.

In alternativen Ausführungsformen kann das landwirtschaftliche Arbeitsgerät (10) von einem Fahrzeug (100) getragen oder selbstfahrend ausgebildet sein.

### Bezugszeichenliste

- 10: Arbeitsgerät
- 12: Kuppeleinrichtung
- 14a, 14b: Räder
- 16: Vorratstank
- 18: Verteilergestänge
- 20a-20c: Gestängesegmente
- 22a-22c: Gestängesegmente
- 24: Ausbringelemente
- 26a-26f: Übersichtssensoreinheiten
- 28a-28e: Präzisionssensoreinheiten
- 30a-30f: Detektionsbereiche
- 32a-32e: Detektionsbereiche
- 34a-34j: Überdeckungsbereiche
- 36: Steuerungseinrichtung
- 38: Auswerteeinrichtung

- 100: Fahrzeug

- B: Boden
- N: Nutzpflanzenbestand
- FR: Fahrtrichtung

## Patentansprüche

1. Landwirtschaftliches Arbeitsgerät (10), insbesondere Verteilmaschine, mit
- mehreren Sensoreinheiten (26a-26f, 28a-28e), welche entlang der Maschinenbreite des landwirtschaftlichen Arbeitsgeräts (10) angeordnet und jeweils dazu eingerichtet sind, innerhalb eines Detektionsbereichs (30a-30f, 32a-32e) Informationen, insbesondere Bewuchsinformationen, zu erfassen; wobei
die Sensoreinheiten (26a-26f, 28a-28e) zumindest eine Übersichtssensoreinheit (26a-26f) und zumindest eine Präzisionssensoreinheit (28a-28e) umfassen, wobei der Detektionsbereich (30a-30f) der zumindest einen Übersichtssensoreinheit (26a-26f) größer ist als der Detektionsbereich (32a-32e) der zumindest einen Präzisionssensoreinheit (28a-28e), **dadurch gekennzeichnet, dass** eine Auswerteeinrichtung (38) dazu eingerichtet ist, die Sensordaten der zumindest einen Übersichtssensoreinheit (26a-26f) und der zumindest einen Präzisionssensoreinheit (28a-28e) zu einem Überdeckungsbereich (34a-34j) zu vergleichen und auf Grundlage des Vergleichsergebnisses den Detektionsbereich (30a-30f) der zumindest einen Übersichtssensoreinheit (26a-26f) auf Schadpflanzen zu untersuchen.

2. Landwirtschaftliches Arbeitsgerät (10) nach Anspruch 1,
**dadurch gekennzeichnet, dass** die mehreren Sensoreinheiten (26a-26f, 28a-28e) dazu eingerichtet sind, elektromagnetische Strahlung zu detektieren, wobei die mehreren Sensoreinheiten (26a-26f, 28a-28e) vorzugsweise als lichtsensitive Sensoreinheiten ausgebildet sind.

3. Landwirtschaftliches Arbeitsgerät (10) nach Anspruch 1 oder 2,
**dadurch gekennzeichnet, dass** sich die Detektionsbereiche (30a-30f, 32a-32e) von einzelnen oder sämtlichen nebeneinander angeordneten Sensoreinheiten (26a-26f, 28a-28e) jeweils in einem Überdeckungsbereich (34a-34j) zumindest abschnittsweise überdecken.

4. Landwirtschaftliches Arbeitsgerät (10) nach einem der vorstehenden Ansprüche,
**dadurch gekennzeichnet, dass** die Sensoreinheiten (26a-26f, 28a-28e) mehrere Übersichtssensoreinheiten (26a-26f) und/oder mehrere Präzisionssensoreinheiten (28a-28e) umfassen.

5. Landwirtschaftliches Arbeitsgerät (10) nach Anspruch 4,
**dadurch gekennzeichnet, dass** sich die Detektionsbereiche (30a-30f, 32a-32e) der Übersichtssensoreinheiten (26a-26f) und der Präzisionssensoreinheiten (28a-28e) in mehreren Überdeckungsbereichen (34a-34j) zumindest abschnittsweise überdecken.

6. Landwirtschaftliches Arbeitsgerät (10) nach einem der vorstehenden Ansprüche,
**dadurch gekennzeichnet, dass** zwischen einzelnen oder sämtlichen benachbarten Präzisionssensoreinheiten (28a-28e) jeweils eine oder mehrere Übersichtssensoreinheiten (26a-26f) angeordnet sind.

7. Landwirtschaftliches Arbeitsgerät (10) nach einem der vorstehenden Ansprüche,
**gekennzeichnet durch** eine Auswerteeinrichtung (38), welche signalleitend mit der zumindest einen Übersichtssensoreinheit (26a-26f) und der zumindest einen Präzisionssensoreinheit (28a-28e) verbunden und dazu eingerichtet ist, auf Grundlage der Sensordaten der zumindest einen Übersichtssensoreinheit (26a-26f) und der zumindest einen Präzisionssensoreinheit (28a-28e) Schadbewuchs zu identifizieren.

8. Landwirtschaftliches Arbeitsgerät (10) nach einem der vorstehenden Ansprüche,
**dadurch gekennzeichnet, dass** die Auswerteeinrichtung (38) dazu eingerichtet ist, die Sensordaten der zumindest einen Präzisionssensoreinheit (28a-28e) auf Grundlage der Sensordaten der zumindest einen Übersichtssensoreinheit (26a-26f) zu extrapolieren.

9. Landwirtschaftliches Arbeitsgerät (10) nach einem der vorstehenden Ansprüche,
**dadurch gekennzeichnet, dass** die Auswerteeinrichtung (38) dazu eingerichtet ist, auf Grundlage der Sensordaten der zumindest einen Übersichtssensoreinheit (26a-26f) eine Bewuchsstruktur zu ermitteln.

10. Landwirtschaftliches Arbeitsgerät (10) nach einem der vorstehenden Ansprüche,
**dadurch gekennzeichnet, dass** das landwirtschaftliche Arbeitsgerät (10) als landwirtschaftliches Spritzgerät, insbesondere als Feldspritze, ausgebildet ist, wobei das landwirtschaftliche Arbeitsgerät (10) vorzugsweise ein Verteilergestänge (18) umfasst, an welchem mehrere Ausbringelemente (24) zum Ausbringen einer Spritzflüssigkeit angeordnet sind.

11. Landwirtschaftliches Arbeitsgerät (10) nach Anspruch 10,
**dadurch gekennzeichnet, dass** die mehreren Sensoreinheiten (26a-26f, 28a-28e) an dem Verteilergestänge (18) angeordnet sind.

12. Landwirtschaftliches Arbeitsgerät (10) nach Anspruch 10 oder 11,
**gekennzeichnet durch** eine Steuerungseinrichtung (36), welche dazu eingerichtet ist, eine lokale Ausbringung der Spritzflüssigkeit in dem Bereich eines identifizierten Schadbewuchses zu initiieren.

13. Landwirtschaftliches Arbeitsgerät (10) nach einem der vorstehenden Ansprüche,
**dadurch gekennzeichnet, dass** eine Übersichtssensoreinheit (26a-26f), mehrere oder sämtliche Übersichtssensoreinheiten (26a-26f) an einem Frontanbau, auf dem Dach oder an anderer Stelle des landwirtschaftlichen Arbeitsgeräts und/oder eines das landwirtschaftliche Arbeitsgerät (10) ziehenden oder tragenden Fahrzeugs angeordnet sind.

14. Landwirtschaftliches Arbeitssystem, mit
- einem landwirtschaftlichen Arbeitsgerät (10) nach dem Oberbegriff des Anspruchs 1 oder einem der verstehenden Ansprüche, und
- zumindest einer flugfähigen Drohne, welche zumindest eine Sensoreinheit (26a-26f, 28a-28e) aufweist, welche dazu eingerichtet sind, innerhalb eines Detektionsbereichs (30a-30f, 32a-32e) Informationen, insbesondere Bewuchsinformationen, zu erfassen; und
**dadurch gekennzeichnet, dass** die Sensoreinheiten (26a-26f, 28a-28e) des landwirtschaftlichen Arbeitsgeräts (10) und der zumindest einen Drohne gemeinsam zumindest eine Übersichtssensoreinheit (26a-26f) und zumindest eine Präzisionssensoreinheit (28a-28e) umfassen, wobei der Detektionsbereich (30a-30f) der zumindest einen Übersichtssensoreinheit (26a-26f) größer ist als der Detektionsbereich (32a-32e) der zumindest einen Präzisionssensoreinheit (28a-28e).

15. Landwirtschaftliches Arbeitssystem nach Anspruch 14,
**dadurch gekennzeichnet, dass** die zumindest eine Drohne zumindest eine Übersichtssensoreinheit (26a-26f) umfasst.

16. Verfahren zum Betreiben eines landwirtschaftlichen Arbeitsgeräts (10), insbesondere eines landwirtschaftlichen Arbeitsgeräts (10) nach einem der vorstehenden Ansprüche, mit den Schritten:
- Erfassen von Informationen, insbesondere Bewuchsinformationen, mittels mehrerer Sensoreinheiten (26a-26f, 28a-28e), welche entlang der Maschinenbreite des landwirtschaftlichen Arbeitsgeräts (10) angeordnet sind, und
- Identifizieren von Schadbewuchs auf Grundlage der Sensordaten der Sensoreinheiten (26a-26f, 28a-28e), wobei
die Sensoreinheiten (26a-26f, 28a-28e) zumindest eine Übersichtssensoreinheit (26a-26f) und zumindest eine Präzisionssensoreinheit (28a-28e) umfassen, wobei der Detektionsbereich (30a-30f) der zumindest einen Übersichtssensoreinheit (26a-26f) größer ist als der Detektionsbereich (32a-32e) der zumindest einen Präzisionssensoreinheit (28a-28e), **gekennzeichnet durch** die Schritte
- Vergleichen der Sensordaten der zumindest einen Übersichtssensoreinheit (26a-26f) und der zumindest einen Präzisionssensoreinheit (28a-28e) zu einem Überdeckungsbereich (34a-34j);
- Untersuchen des Detektionsbereichs (30a-30f) der zumindest einen Übersichtssensoreinheit (26a-26f) auf Schadpflanzen auf Grundlage des Vergleichsergebnisses;
- Extrapolieren der Sensordaten der zumindest einen Präzisionssensoreinheit (28a-28e) auf Grundlage der Sensordaten der zumindest einen Übersichtssensoreinheit (26a-26f).

17. Verfahren nach Anspruch 16,
**dadurch gekennzeichnet, dass** das Identifizieren von Schadbewuchs auf Grundlage der Sensordaten der Sensoreinheiten (26a-26f, 28a-28e) den folgenden Schritt umfasst:
- Auswerten von Sensordaten der zumindest einen Übersichtssensoreinheit (26a-26f) und der zumindest einen Präzisionssensoreinheit (28a-28e) zu einem oder mehreren Überdeckungsbereichen (34a-34j),
wobei sich der Detektionsbereich (30a-30f, 32a-32e) von einzelnen oder sämtlichen nebeneinander angeordneten Sensoreinheiten (26a-26f, 28a-28e) jeweils in einem Überdeckungsbereich (34a-34j) zumindest abschnittsweise überdeckt.

18. Verfahren nach einem der Ansprüche 16 oder 17,
**dadurch gekennzeichnet, dass** das Verfahren ein Verfahren zum Ausbringen einer Spritzflüssigkeit mit einem landwirtschaftlichen Spritzgerät ist und vorzugsweise den folgenden Schritt umfasst:
- lokales Ausbringen der Spritzflüssigkeit in dem Bereich eines identifizierten Schadbewuchses.

## Claims

1. Agricultural apparatus (10), in particular a distribution machine, comprising
- a plurality of sensor units (26a-26f, 28a-28e) which are arranged along the machine width of the agricultural implement (10) and are each configured to acquire information, in particular vegetation information, within a detection region (30a-30f, 32a-32e);
the sensor units (26a-26f, 28a-28e) comprising at least one overview sensor unit (26a-26f) and at least one precision sensor unit (28a-28e), the detection region (30a-30f) of the at least one overview sensor unit (26a-26f) being larger than the detection region (32a-32e) of the at least one precision sensor unit (28a-28e), **characterized in that** an evaluation device (38) is configured to compare the sensor data from the at least one overview sensor unit (26a-26f) and the at least one precision sensor unit (28a-28e) for an overlap region (34a-34j) and to examine the detection region (30a-30f) of the at least one overview sensor unit (26a-26f) for harmful plants on the basis of the comparison result.

2. Agricultural implement (10) according to claim 1,
**characterized in that** the plurality of sensor units (26a-26f, 28a-28e) are configured to detect electromagnetic radiation, the plurality of sensor units (26a-26f, 28a-28e) preferably being designed as light-sensitive sensor units.

3. Agricultural implement (10) according to either claim 1 or claim 2,
**characterized in that** the detection regions (30a-30f, 32a-32e) of individual or all sensor units (26a-26f, 28a-28e) arranged next to one another overlap at least in portions in an overlap region (34a-34j).

4. Agricultural implement (10) according to any of the preceding claims,
**characterized in that** the sensor units (26a-26f, 28a-28e) comprise a plurality of overview sensor units (26a-26f) and/or a plurality of precision sensor units (28a-228e).

5. Agricultural implement (10) according to claim 4,
**characterized in that** the detection regions (30a-30f, 32a-32e) of the overview sensor units (26a-26f) and the precision sensor units (28a-28e) overlap at least in portions in a plurality of overlap regions (34a-34j).

6. Agricultural implement (10) according to any of the preceding claims,
**characterized in that** one or more overview sensor units (26a-26f) are arranged between individual or all adjacent precision sensor units (28a-28e) in each case.

7. Agricultural implement (10) according to any of the preceding claims,
**characterized by** an evaluation device (38) which is connected in a signal-conducting manner to the at least one overview sensor unit (26a-26f) and the at least one precision sensor unit (28a-28e) and is configured to identify harmful vegetation on the basis of the sensor data from the at least one overview sensor unit (26a-26f) and the at least one precision sensor unit (28a-228e).

8. Agricultural implement (10) according to any of the preceding claims,
**characterized in that** the evaluation device (38) is configured to extrapolate the sensor data from the at least one precision sensor unit (28a-28e) on the basis of the sensor data from the at least one overview sensor unit (26a-26f).

9. Agricultural implement (10) according to any of the preceding claims,
**characterized in that** the evaluation device (38) is configured to determine a vegetation structure on the basis of the sensor data from the at least one overview sensor unit (26a-26f).

10. Agricultural implement (10) according to any of the preceding claims,
**characterized in that** the agricultural implement (10) is designed as an agricultural sprayer, in particular as a field sprayer, the agricultural implement (10) preferably comprising a distributor boom (18) on which a plurality of dispensing elements (24) for dispensing a spraying liquid are arranged.

11. Agricultural implement (10) according to claim 10,
**characterized in that** the plurality of sensor units (26a-26f, 28a-28e) are arranged on the distributor boom (18).

12. Agricultural implement (10) according to either claim 10 or claim 11,
**characterized by** a control device (36) which is configured to initiate local dispensing of the spray liquid in the region of identified harmful vegetation.

13. Agricultural implement (10) according to any of the preceding claims,
**characterized in that** an overview sensor unit (26a-26f), or a plurality or all of the overview sensor units (26a-26f) are arranged on a front attachment, on the roof or elsewhere on the agricultural implement and/or on a vehicle pulling or carrying the agricultural implement (10).

14. Agricultural working system comprising
- an agricultural implement (10) according to the preamble of claim 1 or any of the understanding claims, and
- at least one aerial drone which has at least one sensor unit (26a-26f, 28a-28e) which is configured to acquire information, in particular vegetation information, within a detection region (30a-30f, 32a-32e); and
**characterized in that** the sensor units (26a-26f, 28a-28e) of the agricultural implement (10) and of the at least one drone together comprise at least one overview sensor unit (26a-26f) and at least one precision sensor unit (28a-28e), the detection region (30a-30f) of the at least one overview sensor unit (26a-26f) being larger than the detection region (32a-32e) of the at least one precision sensor unit (28a-28e).

15. Agricultural working system according to claim 14,
**characterized in that** the at least one drone comprises at least one overview sensor unit (26a-26f).

16. Method for operating an agricultural implement (10), in particular an agricultural implement (10) according to any of the preceding claims, comprising the steps of:
- acquiring information, in particular vegetation information, by means of a plurality of sensor units (26a-26f, 28a-28e) which are arranged along the machine width of the agricultural implement (10), and
- identifying harmful vegetation on the basis of the sensor data from the sensor units (26a-26f, 28a-28e),
the sensor units (26a-26f, 28a-28e) comprising at least one overview sensor unit (26a-26f) and at least one precision sensor unit (28a-28e), the detection region (30a-30f) of the at least one overview sensor unit (26a-26f) being larger than the detection region (32a-32e) of the at least one precision sensor unit (28a-28e),
**characterized by** the following steps
- comparing the sensor data from the at least one overview sensor unit (26a-26f) and the at least one precision sensor unit (28a-28e) for an overlap region (34a-34j);
- examining the detection region (30a-30f) of the at least one overview sensor unit (26a-26f) for harmful plants on the basis of the comparison result;
- extrapolating the sensor data from the at least one precision sensor unit (28a-28e) on the basis of the sensor data from the at least one overview sensor unit (26a-26f).

17. Method according to claim 16,
**characterized in that** identifying harmful vegetation on the basis of the sensor data from the sensor units (26a-26f, 28a-28e) comprises the following step:
- evaluating sensor data from the at least one overview sensor unit (26a-26f) and the at least one precision sensor unit (28a-28e) for one or more overlap regions (34a-34j),
the detection region (30a-30f, 32a-32e) of individual or all sensor units (26a-26f, 28a-28e) arranged next to one another overlap at least in portions in an overlap region (34a-34j).

18. Method according to either of claims 16 or 17,
**characterized in that** the method is a method for dispensing a spray liquid using an agricultural spraying apparatus and preferably comprises the following step:
- locally dispensing the spray liquid in the region of identified harmful vegetation.

## Revendications

1. Outil agricole (10), en particulier machine de distribution, comportant
- plusieurs unités formant capteur (26a-26f, 28a-28e) disposées le long de la largeur de machine de l'outil agricole (10) et respectivement configurées pour détecter, dans une zone de détection (30a-30f, 32a-32e), des informations, en particulier des informations de végétation ; dans lequel
les unités formant capteur (26a-26f, 28a-28e) comprennent au moins une unité formant capteur de vue d'ensemble (26a-26f) et au moins une unité formant capteur de précision (28a-28e), dans lequel la zone de détection (30a-30f) de l'au moins une unité formant capteur de vue d'ensemble (26a-26f) est supérieure à la zone de détection (32a-32e) de l'au moins une unité formant capteur de précision (28a-28e), **caractérisé en ce qu'**un dispositif d'évaluation (38) est configuré pour comparer les données de capteur de l'au moins une unité formant capteur de vue d'ensemble (26a-26f) et de l'au moins une unité formant capteur de précision (28a-28e) à une zone de chevauchement (34a-34j) et pour examiner, sur la base du résultat de comparaison, la zone de détection (30a-30f) de l'au moins une unité formant capteur de vue d'ensemble (26a-26f) pour détecter des plantes nuisibles.

2. Outil agricole (10) selon la revendication 1,
**caractérisé en ce que** les unités formant capteur (26a-26f, 28a-28e) sont configurées pour détecter un rayonnement électromagnétique, dans lequel les unités formant capteur (26a-26f, 28a-28e) sont de préférence réalisées sous la forme d'unités formant capteur sensibles à la lumière.

3. Outil agricole (10) selon la revendication 1 ou 2, **caractérisé en ce que** les zones de détection (30a-30f, 32a-32e) de chacune ou de l'ensemble des unités formant capteur (26a-26f, 28a-28e) juxtaposées se chevauchent, au moins dans certaines sections, respectivement dans une zone de chevauchement (34a-34j).

4. Outil agricole (10) selon l'une des revendications précédentes, **caractérisé en ce que** les unités formant capteur (26a-26f, 28a-28e) comprennent plusieurs unités formant capteur de vue d'ensemble (26a-26f) et/ou plusieurs unités formant capteur de précision (28a-28e).

5. Outil agricole (10) selon la revendication 4,
**caractérisé en ce que** les zones de détection (30a-30f, 32a-32e) des unités formant capteur de vue d'ensemble (26a-26f) et des unités formant capteur de précision (28a-28e) se chevauchent, au moins dans certaines sections, dans plusieurs zones de chevauchement (34a-34j).

6. Outil agricole (10) selon l'une des revendications précédentes,
**caractérisé en ce que**, entre chacune ou l'ensemble des unités formant capteur de précision (28a-28e) adjacentes, sont disposées respectivement une ou plusieurs unités formant capteur de vue d'ensemble (26a-26f).

7. Outil agricole (10) selon l'une des revendications précédentes,
**caractérisé par** un dispositif d'évaluation (38) connecté de manière à conduire des signaux à l'au moins une unité formant capteur de vue d'ensemble (26a-26f) et à l'au moins une unité formant capteur de précision (28a-28e) et configuré pour identifier une végétation nuisible sur la base des données de capteur de l'au moins une unité formant capteur de vue d'ensemble (26a-26f) et de l'au moins une unité formant capteur de précision (28a-28e).

8. Outil agricole (10) selon l'une des revendications précédentes,
**caractérisé en ce que** le dispositif d'évaluation (38) est configuré pour extrapoler les données de capteur de l'au moins une unité formant capteur de précision (28a-28e) sur la base des données de capteur de l'au moins une unité formant capteur de vue d'ensemble (26a-26f).

9. Outil agricole (10) selon l'une des revendications précédentes,
**caractérisé en ce que** le dispositif d'évaluation (38) est configuré pour déterminer une structure de végétation sur la base des données de capteur de l'au moins une unité formant capteur de vue d'ensemble (26a-26f).

10. Outil agricole (10) selon l'une des revendications précédentes,
**caractérisé en ce que** l'outil agricole (10) est réalisé sous la forme d'un appareil de pulvérisation agricole, en particulier sous la forme d'un pulvérisateur agricole, dans lequel l'outil agricole (10) comprend de préférence une tige de distribution (18) sur laquelle plusieurs éléments d'épandage (24) sont disposés pour l'épandage d'un liquide de pulvérisation.

11. Outil agricole (10) selon la revendication 10,
**caractérisé en ce que** les unités formant capteur (26a-26f, 28a-28e) sont disposées sur la tige de distribution (18).

12. Outil agricole (10) selon la revendication 10 ou 11,
**caractérisé par** un dispositif de commande (36) configuré pour initier un épandage local du liquide de pulvérisation dans la zone d'une végétation nuisible identifiée.

13. Outil agricole (10) selon l'une des revendications précédentes,
**caractérisé en ce qu'**une unité formant capteur de vue d'ensemble (26a-26f), plusieurs ou l'ensemble des unités formant capteur de vue d'ensemble (26a-26f) sont disposées sur un attelage frontal, sur le toit ou à un autre endroit de l'outil agricole et/ou d'un véhicule tractant ou portant l'outil agricole (10).

14. Système de travail agricole, comportant
- un outil agricole (10) selon le préambule de la revendication 1 ou de l'une des revendications comprises, et
- au moins un drone capable de voler, lequel présente au moins une unité formant capteur (26a-26f, 28a-28e) configurée pour détecter, dans une zone de détection (30a-30f, 32a-32e), des informations, en particulier des informations de végétation ; et
**caractérisé en ce que** les unités formant capteur (26a-26f, 28a-28e) de l'outil agricole (10) et de l'au moins un drone comprennent collectivement au moins une unité formant capteur de vue d'ensemble (26a-26f) et au moins une unité formant capteur de précision (28a-28e), dans lequel la zone de détection (30a-30f) de l'au moins une unité formant capteur de vue d'ensemble (26a-26f) est supérieure à la zone de détection (32a-32e) de l'au moins une unité formant capteur de précision (28a-28e).

15. Système de travail agricole selon la revendication 14,
**caractérisé en ce que** l'au moins un drone comprend au moins une unité formant capteur de vue d'ensemble (26a-26f).

16. Procédé permettant de faire fonctionner un outil agricole (10), en particulier un outil agricole (10) selon l'une des revendications précédentes, comportant les étapes suivantes :
- détection d'informations, en particulier d'informations de végétation, au moyen de plusieurs unités formant capteur (26a-26f, 28a-28e) disposées le long de la largeur de machine de l'outil agricole (10), et
- identification d'une végétation nuisible sur la base des données de capteur des unités formant capteur (26a-26f, 28a-28e), dans lequel
les unités formant capteur (26a-26f, 28a-28e) comprennent au moins une unité formant capteur de vue d'ensemble (26a-26f) et au moins une unité formant capteur de précision (28a-28e), dans lequel la zone de détection (30a-30f) de l'au moins une unité formant capteur de vue d'ensemble (26a-26f) est supérieure à la zone de détection (32a-32e) de l'au moins une unité formant capteur de précision (28a-28e),
**caractérisé par** les étapes suivantes
- comparaison des données de capteur de l'au moins une unité formant capteur de vue d'ensemble (26a-26f) et de l'au moins une unité formant capteur de précision (28a-28e) à une zone de chevauchement (34a-34j) ;
- examen de la zone de détection (30a-30f) de l'au moins une unité formant capteur de vue d'ensemble (26a-26f) pour détecter des plantes nuisibles sur la base du résultat de comparaison ;
- extrapolation des données de capteur de l'au moins une unité formant capteur de précision (28a-28e) sur la base des données de capteur de l'au moins une unité formant capteur de vue d'ensemble (26a-26f).

17. Procédé selon la revendication 16,
**caractérisé en ce que** l'identification d'une végétation nuisible sur la base des données de capteur des unités formant capteur (26a-26f, 28a-28e) comprend l'étape suivante :
- évaluation de données de capteur de l'au moins une unité formant capteur de vue d'ensemble (26a-26f) et de l'au moins une unité formant capteur de précision (28a-28e) par rapport à une ou plusieurs zones de chevauchement (34a-34j),
dans lequel la zone de détection (30a-30f, 32a-32e) de chacune ou de l'ensemble des unités formant capteur (26a-26f, 28a-28e) juxtaposées se chevauchent, au moins dans certaines sections, respectivement dans une zone de chevauchement (34a-34j).

18. Procédé selon l'une des revendications 16 ou 17,
**caractérisé en ce que** le procédé est un procédé permettant l'épandage d'un liquide de pulvérisation à l'aide d'un appareil de pulvérisation agricole, et comprend de préférence l'étape suivante :
- épandage local du liquide de pulvérisation dans la zone d'une végétation nuisible identifiée.
